# EUROPEAN PATENT APPLICATION

(11) **EP 4 800 659 A1**
(43) Date of publication of application: **02.09.2026**
(21) Application number: 26159358.6
(22) Date of filing: 18.02.2026
(51) Int. Cl.: G06V 10/74, A01B 69/04, G06V 10/764, G06V 10/774, G06V 10/80, G06V 20/56, G06V 20/64

(54) **AUTONOMOUS AGRICULTURAL SYSTEM AND RELATED METHOD**

(30) Priority: 27.02.2025 US 202563764481 P
(71) Applicant: AGCO International GmbH, 8212 Neuhausen am Rheinfall (CH); PTx Trimble LLC, Westminster, CO 80021 (US)
(72) Inventor: CHRISTIANSEN, Martin Peter, 8930 Randers (DK); MUJKIC, Esma, 8930 Randers (DK); Steen, Kim Arild, 8930 Randers (DK); Beck, Nicolai, 8930 Randers (DK); Toustrup, Viktor Johns, 8930 Randers (DK); Murman, Josh, Rising City, 68658 (US); SLEZAK, Filip, 8930 Randers (DK)
(74) Representative: AGCO Intellectual Property Department

(57) **Abstract**

A cart management system includes a stereo camera system and is configured to: capture, via the stereo camera system, first and second image data and second image data of the agricultural vehicle, the cart, and a transport vehicle, estimate depth data from the first image data and the second image data; receive GNSS data and IMU data related to at least one of the agricultural vehicle, the cart, and a transport vehicle; fuse the depth data with the GNSS data and IMU data to generate enhanced fused data; based at least partially on the enhanced fused data, determine an aligned position of the cart relative to the transport vehicle; and responsive to determining the aligned position, cause the cart to automatically align with the transport vehicle.

## Description

### CROSS-REFERENCE TO RELATED APPLICATIONS

N/A

### BACKGROUND

In agricultural operations, an unloading process of grain from tractors with trailers into trucks is labor-intensive and prone to inefficiencies. Conventional systems often require manual alignment and monitoring, leading to increased labor costs and the potential for human error. Additionally, existing automated solutions struggle with accurately detecting and aligning with trucks, especially in dynamic and cluttered field environments.

The unloading process is further complicated by the variability in truck and trailer designs, which can affect the alignment and transfer of grain. Different trailer heights, widths, and unloading mechanisms necessitate precise adjustments to ensure proper grain transfer without spillage. Moreover, the presence of obstacles such as uneven terrain, crop residues, and other machinery in the field can hinder the accurate positioning of the tractor and trailer relative to the truck.

Environmental factors such as dust, rain, and varying light conditions also pose significant challenges to the reliability of existing automated systems. Dust and debris can obscure sensors, while rain and moisture can affect the electronic components, leading to potential malfunctions. Varying light conditions, from bright sunlight to low-light scenarios, can impact the accuracy of visual detection systems, further complicating the unloading process.

### BRIEF SUMMARY

Some embodiments include an autonomous agricultural system comprising an agricultural vehicle and a cart operably coupled to the agricultural vehicle, the agricultural vehicle comprising: a cart management system for monitoring and controlling operation of the cart and comprising: an array of sensors mounted on at least one the agricultural vehicle or the cart; at least one processor; and at least one non-transitory computer-readable storage medium storing instructions thereon that, when executed by the at least one processor, cause the cart management system to: capture, via a stereo camera system of the array of sensors and in real-time, first image data and second image data of the agricultural vehicle, the cart, and a transport vehicle; capture, via the array of sensors, sensor data of the agricultural vehicle, the cart, and a transport vehicle; match features depicted in the first image data and the second image data; based at least partially on matched features depicted in the first image data and the second image data, determine a disparity of the first image data and the second image data; based at least partially on the disparity of the first image data and the second image data, estimate depth data from the first image data and the second image data; analyze the sensor data to identify and classify the agricultural vehicle, the cart, and the transport vehicle to generate labeled sensor data; fuse the labeled sensor data with the depth data to form labeled fused data; receive GNSS data and IMU data related to at least one of the agricultural vehicle, the cart, and a transport vehicle; fuse the labeled fused data with the GNSS data and IMU data to generate enhanced fused data; based at least partially on the enhanced fused data, determine an aligned position of the cart relative to the transport vehicle; and responsive to determining the aligned position, cause the cart to automatically align with the transport vehicle.

The disparity of the first image data and the second image data may be inversely proportional to a distance of an object depicted in the first image data and the second image data from the first stereo camera and the second stereo camera, respectively.

The depth data may be determined based at least partially on a distance between the first stereo camera and the second stereo camera.

The distance may be at least 0.5m.

The cart management system may further include instructions that, when executed by the at least one processor, cause the cart management system to convert the estimated depth data to point-cloud data.

Fusing the labeled sensor data with the depth data comprises utilizing a PointPillars algorithm to transform the point-cloud data into two-dimensional data.

The cart management system may further include instructions that, when executed by the at least one processor, cause the cart management system to: capture, via the array of sensors and in real-time, sensor data of an auger system of an unloading system of the cart; analyze the captured sensor data of the auger system to determine a position and an orientation of the auger; and determine the aligned position based at least partially on the determined position and the determined orientation of the auger.

Analyzing the sensor data to identify and classify the agricultural vehicle, the cart, and the transport vehicle to generate the labeled sensor data may include utilizing a single shot detector algorithm to identify the agricultural vehicle, the cart, and the transport vehicle.

Determining the aligned position may include determining an alignment distance at which the aligned position is located from the transport vehicle.

The GNSS data may be related to the agricultural vehicle and the cart.

The IMU data may be related to the agricultural vehicle and the cart.

The GNSS data is related to the transport vehicle.

The aligned position may include a position and an orientation of the cart relative to a determined position and a determined orientation of the transport vehicle that aligns the cart for unloading a commodity within a hopper of the cart into a trailer of the transport vehicle.

The position and the orientation of the cart of the aligned position, when the cart is in the aligned position, may result in a downspout of an auger being oriented above the trailer of the transport vehicle and at least substantially horizontally centered between lateral sidewalls of the trailer of the transport vehicle.

The cart management system may further include instructions that, when executed by the at least one processor, cause the cart management system to: analyze the sensor data to determine at least one characteristic of the transport vehicle; and based at least partially on the determined at least one characteristic of the transport vehicle, determine the aligned position of the cart that relative to the a transport vehicle.

Some embodiments include a method of monitoring and controlling operation of a cart of an autonomous agricultural system, the cart being operably coupled to an agricultural vehicle of the autonomous agricultural system, the method comprising: capturing, via a stereo camera system of an array of sensors and in real-time, first image data and second image data of the agricultural vehicle, the cart, and a transport vehicle; capturing, via the array of sensors, sensor data of the agricultural vehicle, the cart, and a transport vehicle; matching features depicted in the first image data and the second image data; based at least partially on matched features depicted in the first image data and the second image data, determining a disparity of the first image data and the second image data; based at least partially on the disparity of the first image data and the second image data, estimating depth data from the first image data and the second image data; analyzing the sensor data to identify and classify the agricultural vehicle, the cart, and the transport vehicle to generate labeled sensor data; fusing the labeled sensor data with the depth data to form labeled fused data; receiving GNSS data and IMU data related to at least one of the agricultural vehicle, the cart, and a transport vehicle; fusing the labeled fused data with the GNSS data and IMU data to generate enhanced fused data; based at least partially on the enhanced fused data, determining an aligned position of the cart relative to the transport vehicle; and responsive to determining the aligned position, causing the cart to automatically align with the transport vehicle..

Causing the cart to automatically align with the transport vehicle may include determining a path between a current position and a current orientation of the cart and the aligned position relative to the transport vehicle; and causing the agricultural vehicle to travel along the determined path to move the cart to the aligned position.

Capturing the first image data and the second image data may be triggered by the agricultural vehicle crossing a virtual boundary.

The method may further include converting the estimated depth data to point-cloud data; and utilizing a PointPillars algorithm to transform the point-cloud data into two-dimensional data.

One or more embodiments include cart management system for monitoring and controlling operation of a cart of an autonomous agricultural system, the cart being operably coupled to an agricultural vehicle of the autonomous agricultural system, the cart management system comprising: an array of sensors mounted on at least one the agricultural vehicle or the cart; at least one processor; and at least one non-transitory computer-readable storage medium storing instructions thereon that, when executed by the at least one processor, cause the cart management system to: capture, via a stereo camera system of the array of sensors and in real-time, first image data and second image data of the agricultural vehicle, the cart, and a transport vehicle; capture, via the array of sensors, sensor data of the agricultural vehicle, the cart, and a transport vehicle; match features depicted in the first image data and the second image data; based at least partially on matched features depicted in the first image data and the second image data, determine a disparity of the first image data and the second image data; based at least partially on the disparity of the first image data and the second image data, estimate depth data from the first image data and the second image data; analyze the sensor data to identify and classify the agricultural vehicle, the cart, and the transport vehicle to generate labeled sensor data; fuse the labeled sensor data with the depth data to form labeled fused data; receive GNSS data and IMU data related to at least one of the agricultural vehicle, the cart, and a transport vehicle; fuse the labeled fused data with the GNSS data and IMU data to generate enhanced fused data; based at least partially on the enhanced fused data, determine an aligned position of the cart relative to the transport vehicle; and responsive to determining the aligned position, cause the cart to automatically align with the transport vehicle.

Other technical features may be readily apparent to one skilled in the art from the following figures, descriptions, and claims.

Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE SEVERAL VIEWS OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a schematic top view of an autonomous agricultural system and a plurality of transport vehicles according to one or more embodiments of the disclosure;
FIG. 2 shows a perspective view of an autonomous agricultural system according to one or more embodiments of the disclosure;
FIG. 3 shows a top view of an autonomous agricultural system according to one or more embodiments of the disclosure;
FIG. 4 shows a top view of a transport vehicle according to one or more embodiments of the disclosure;
FIG. 5 shows a side view of a cart and an auger of an auger system of the cart according to one or more embodiments of the disclosure;
FIG. 6 shows a schematic view of a cart management system according to one or more embodiments of the present disclosure;
FIG. 7 shows a flowchart of a method of monitoring and controlling operation of a cart and/or agricultural vehicle according to one or more embodiments; and
FIG. 8A through FIG. 8D show schematic representations of an agricultural vehicle and cart aligning with a transport vehicle along an approach path according to one or more embodiments; and
FIG. 9 is a schematic view of a central controller according to embodiments of the disclosure.

### DETAILED DESCRIPTION

Illustrations presented herein are not meant to be actual views of any particular agricultural vehicle, grain cart, sensors, cart management system, component, or system, but are merely idealized representations that are employed to describe embodiments of the disclosure. Additionally, elements common between figures may retain the same numerical designation for convenience and clarity.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above " "beneath," "side," "outer," "inner," "front," "rear," "lateral," etc., is used for clarity and convenience in understanding the disclosure and accompanying drawings, and does not connote or depend on any specific preference or order, except where the context clearly indicates otherwise. For example, these terms may refer to an orientation of elements of an agricultural vehicle, a combine harvester, a cart, a transport vehicle, and/or an autonomous agricultural system as illustrated in the drawings. Additionally, these terms may refer to an orientation of elements of an agricultural vehicle, a combine harvester, a cart, and/or a transport vehicle when utilized in a conventional manners.

As used herein, the term "proximate," when utilized to describe positions of agricultural vehicle and/or the cart to another object (e.g., transport vehicle) means that the agricultural vehicle and/or the cart and the other object are within a given distance from each other. The distance may be at least partially dependent on a size (e.g., a lateral width in a horizontal direction orthogonal to a path of travel) of the agricultural vehicle and/or the cart. For example, the agricultural vehicle or the cart may be proximate the other object when the agricultural vehicle is within 20m, 10m, 5m, 2m, or 1m of the other object. In some embodiments, the distance may be a percentage (e.g., 25%) of the overall lateral width of the agricultural vehicle and/or cart. Additionally, in one or more embodiments, the distance may be based on an unloading system of the cart. For instance, the distance may include an appropriate distance between the cart and a transport vehicle for unloading process (e.g., unloading grain from the cart to the transport vehicle).

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

As used herein, the term "representation" may refer to a digital encoding of a physical object or phenomenon as captured by one or more sensors. The digital encoding may take various forms depending on the type of sensor data. As non-limiting examples 1) in image data, a representation may include pixels that represent visual characteristics of the object, 2) in video data, in addition to the representations of image data, a representation may include a sequence of images (frames) that capture the object's appearance and movement over time, 3) in light detection and ranging (LIDAR) data, a representation may include a three-dimensional (3D) point cloud where each point represents a precise location on the object's surface, 4) in radio detection and ranging (RADAR) data, a representation may include a two-dimensional (2D) map or 3D map showing the object's location and movement based on radio wave reflections, 5) in thermal data, as representation may include a thermal image where different colors represent the object's temperature variations, and 6) in sound data, a representation may include a digital signal representing sound waves produced by or reflected from the object. Put another way, a representation, as used herein, includes a structured form of data that allows for the analysis, interpretation, and understanding of the physical object or phenomenon captured by the sensors.

As used herein, the term "real-time" may refer to immediate or near-instantaneous collection (e.g., capturing) and processing of data (e.g., sensor data) as events occur. As a result, sensor data is captured and made available for analysis or decision-making without significant delay, allowing for timely responses and actions based on most current information.

As used herein the term "position" may refer to specific location of an object in a given space, typically defined by coordinates (e.g., x, y, z) in a coordinate system. For example, a position of a cart in a field might be given by its latitude, longitude, and altitude.

As used herein the term "orientation" may refer to an object's alignment relative to a reference frame. For example, the term "orientation" refers to how an object is aligned and rotated in space. For example, the term "orientation" refers to rotational coordinates (e.g., pitch, roll, yaw).

As used herein, the terms "Global Navigation Satellite System data" or "GNSS data" refer to data including a geographical location and a velocity of an object (e.g., agricultural vehicle) at a given time. The GNSS data may be determined by processing signals received from multiple satellites within global navigation satellite constellations such as Global Positioning System (GPS), GLONASS, Galileo, and BeiDou. In particular, a GNSS receiver may continuously acquire and track satellite signals, calculate time delays between a signal transmission and reception to compute pseudoranges, and use these pseudoranges to determine a position of the GNSS receiver through trilateration.

As used herein, the terms "Inertial Measurement Unit data" or "IMU data" refer to data including one or more of a specific force, an attitude, a velocity, an acceleration, an angular velocity, and/or an orientation of a moving object (e.g., agricultural vehicle) at a given time.

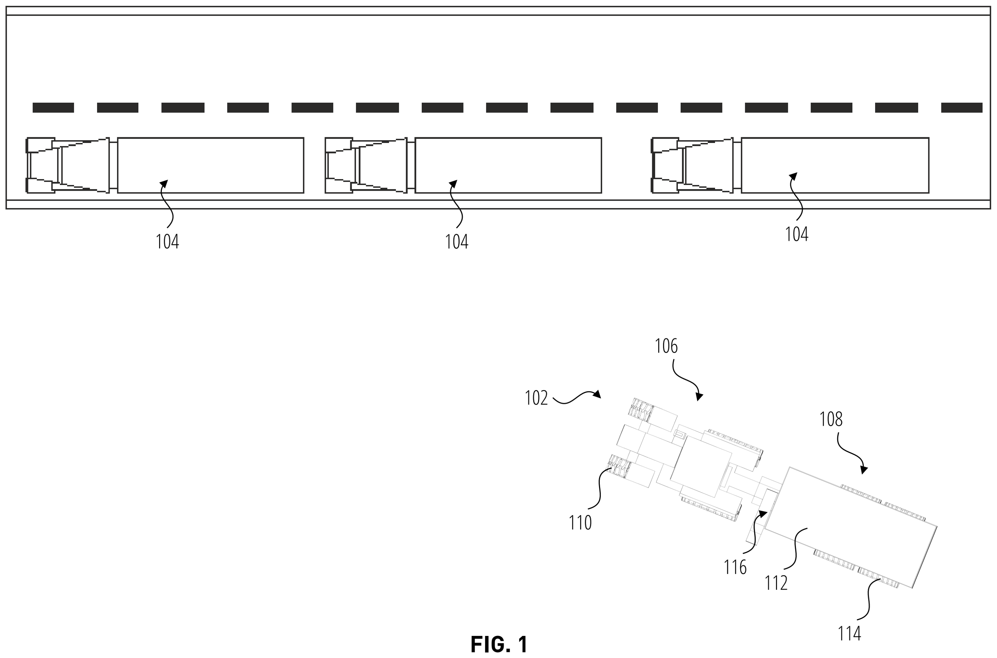

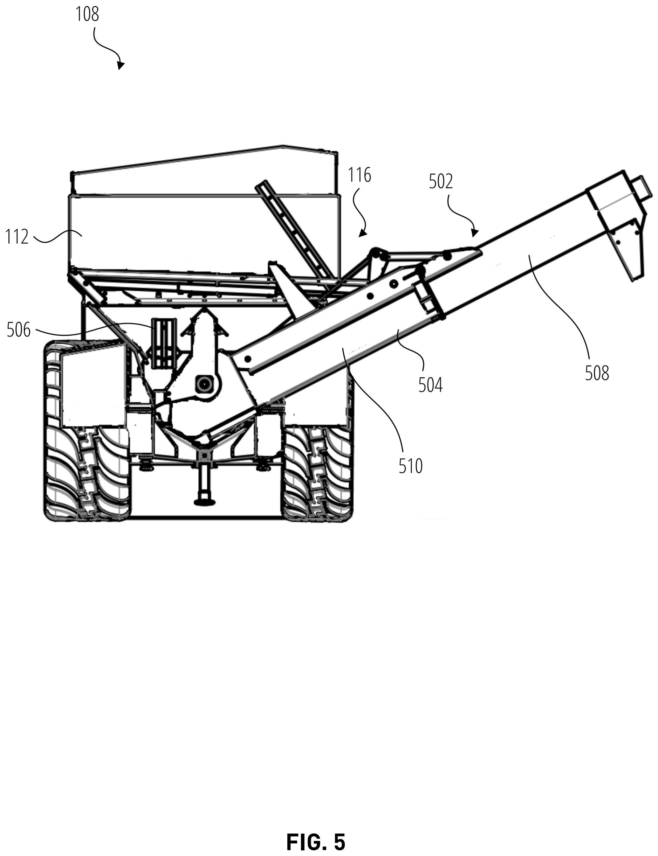

FIG. 1 is a simplified top view of an autonomous agricultural system 102 and a plurality of transport vehicles 104 according to one or more embodiments of the disclosure. The autonomous agricultural system 102 may include an agricultural vehicle 106 (e.g., a tractor) and a cart 108 (e.g., commodity trailer). The cart 108 may be coupled to a hitch of the agricultural vehicle 202 via one or more hitch attachments. The agricultural vehicle 202 may be supported by wheels 110 and/or tracks. The cart 108 may include a hopper 112 supported by wheels 114. The hopper 112 may define a container (e.g., bin) for receiving a commodity (e.g., grain) from a harvester vehicle (e.g., a combine harvester) and may include a tapered shape that facilitates a flow of the commodity towards an unloading system 116 of the cart 108. The unloading system 116 may be utilized to unload the commodity from the hopper 112 and into one or more of the plurality of transport vehicles 104. The unloading system 116 may include an auger system including an auger and a hydraulic motor. The unloading system 116 is described in greater detail below in regard to FIG. 5 through FIG. 7.

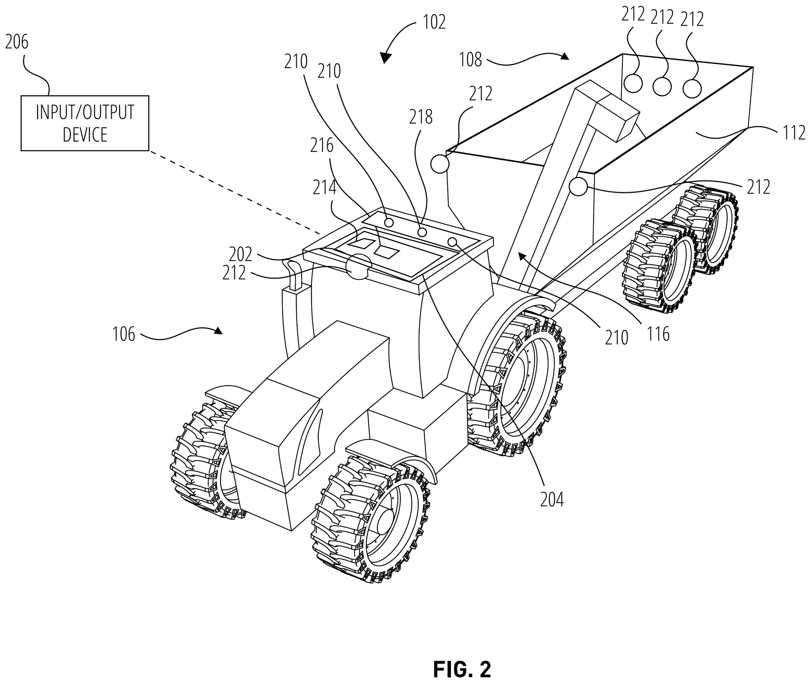

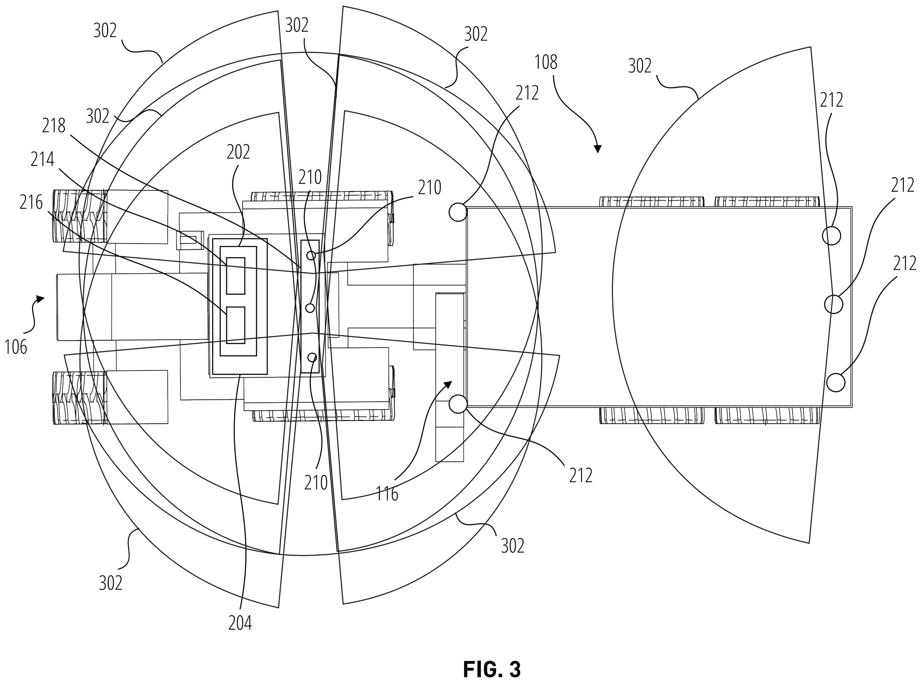

FIG. 2 is a simplified perspective view of the autonomous agricultural system 102 of FIG. 1 according to one or more embodiments of the disclosure. FIG. 3 is a simplified top view of the autonomous agricultural system 102 of FIG. 2. Referring to FIG. 2 and FIG. 3 together, as noted above, the autonomous agricultural system 102 may include the agricultural vehicle 106 and the cart 108, and the cart 108 may include the hopper 112 and the unloading system 116. In some embodiments, the agricultural vehicle 106 may include a tractor.

The agricultural vehicle 106 may further include a control system 204. The control system 204 may be configured to control one or more operations and devices of the agricultural vehicle 106 and/or the cart 108. In some embodiments, one or more parts of the control system 204 may be located in, for example, a cabin of the agricultural vehicle 106. In other embodiments, one or more parts of the control system 204 may be located on a roof of the cabin of the agricultural vehicle 106, in or proximate an engine compartment of the agricultural vehicle 106, or any other suitable portion of the agricultural vehicle 106. In one or more embodiments, one or more parts of the control system 204 may be located on or within the agricultural vehicle 106 and one or more other parts of the control system 204 may be located on or within the cart 108. In some embodiments, one or more parts of the control system 204 may be remote to the agricultural vehicle 106 and/or the cart 108.

The control system 204 may include a cart management system 202 for monitoring operations of the cart 108. The cart management system 202 may include at least one input/output device 206 (e.g., a display) and a perception system 208. The perception system 208 may be mounted on one or more of the agricultural vehicle 106 or the cart 108. Furthermore, the perception system 208 may include one or more sensors 210 (e.g., an array of sensors). The one or more sensors 210 may be at least partially operated by the cart management system 202. In some embodiments, the perception system 208 and associated one or more sensors 210 are mounted on the agricultural vehicle 106 and the cart 108 such that fields of view 302 of the sensors 210 encompass the agricultural vehicle 106, the cart 108, equipment (e.g., unloading system 116) of the cart 108, and/or the transport vehicle 104. For example, the fields of view 302 of the sensors 210 may at least substantially encompass entireties of the agricultural vehicle 106, the cart 108, equipment (e.g., unloading system 116) of the cart 108, and/or the transport vehicle 104. A field of view 302 may refer to an angular extent of an observable scene that a given sensor 210 can capture. Accordingly, the one or more sensors 210 may have a viewpoint (i.e., a position from which the field of view 302 is observed) originating from the agricultural vehicle 106, and one or more sensors 210 may have a viewpoint (i.e., a position from which the field of view 302 is observed) originating from the cart 108.

Some of the sensors 210 may have a respective fields of view. As is described in further detail below, in some embodiments, the sensors 210 may be configured and/or controlled to capture sensor data related to the cart 108 and, in some embodiments, the agricultural vehicle 106 while the agricultural vehicle 106 and/or the cart 108 are performing an agricultural process (e.g., harvesting a commodity, unloading a commodity). Specifically, the sensors 210 may be controlled to capture sensor data such as images, videos, 3D representations, and/or other representations of the cart 108 and agricultural vehicle 106, and information (e.g., any of the foregoing data) related to the environments surrounding or around the cart 108 and the agricultural vehicle 106. In some embodiments, the sensor data may include one or more of image data, video data, thermal data, light detection and ranging (LIDAR) data, RADAR data, perception data, 3D data, and/or ultrasonic data.

In some embodiments, one or more of the sensors 210 includes a field of view that faces an interior of the hopper 112 of the cart 108. In other words, one or more of the sensors 210 includes a field of view that views (e.g., encompasses) a commodity within the hopper 112 of the cart 108. In some embodiments, one or more of the sensors 210 includes a field of view that faces the unloading system 116 of the cart 108. In one or more embodiments, one or more of the sensors 210 includes a field of view that faces a lateral side or away from a lateral side of the cart 108. In one or more embodiments, one or more of the sensors 210 includes a field of view that faces hydraulic joints of the cart 108. In some embodiments, one or more of the sensors 210 includes a field of view that generally faces the cart 108 (e.g., faces rearward from the agricultural vehicle 106). In one or more embodiments, one or more of the sensors 210 includes a field of view that faces toward a direction of travel of the agricultural vehicle 106. In one or more embodiments, one or more of the sensors 210 includes a field of view that faces away from a direction of travel of the agricultural vehicle 106.

Additionally, the sensors 210 may be configured and controlled to capture various types of sensor data related to the agricultural vehicle 106, the cart 108, and transport vehicles 104. Specifically, the sensors 210 may be controlled to capture sensor data such as images of the agricultural vehicle 106, the cart 108, and transport vehicles 104, videos of the agricultural vehicle 106, the cart 108, and transport vehicles 104, 3D representations of the agricultural vehicle 106, the cart 108, and transport vehicles 104, other visual depictions of the agricultural vehicle 106, the cart 108, and transport vehicles 104, and information (e.g., any of the foregoing data) related to the environments surrounding or around the agricultural vehicle 106, the cart 108, and transport vehicles 104.

Furthermore, as is described in greater detail below, the cart management system 202 may utilize the sensor data captured by the sensors 210 of the perception system 208 to monitor and control operation of the cart 108 and/or the agricultural vehicle 106. In particular, the cart management system 202 may utilize the sensor data captured by the sensors 210 to monitor and control the unloading system 116 of the cart 108, validate orientations of an auger system of the unloading system 116, align the cart 108 relative to a combine harvester during a harvesting operation, align the cart 108 relative to a transport vehicle 104, orient the cart 108 relative to the agricultural vehicle 106, and/or unload a commodity from the cart 108 to a selected transport vehicle 104.

In some embodiments, the sensors 210 may include one or more of a light detection and ranging (LIDAR) camera, an RGB (red, green, and blue) camera, a stereo camera, ultrasonic sensors, or a radio detection and ranging (RADAR) device. In further embodiments, one or more of the sensors 210 may include a thermal camera. For example, one or more of the sensors 210 may include a long-wave infrared (LWIR) camera. In additional embodiments, one or more of the sensors 210 may include one or more of a mid-wave infrared (MWIR) camera, a short-wave infrared (SWIR) camera, a near infrared (NIR) camera, an ultraviolet camera (UV camera), or a visible light camera with an infrared filter.

In some embodiments, the array of sensors 210 may include at least one high resolution camera and at least one LIDAR sensor. Furthermore, a field of view 302 of the at least one high resolution camera may at least substantially entirely overlap with a field of view 302 of the LIDAR sensor. For instance, the at least one high resolution camera and the LIDAR sensor may face a same direction and the optical center of the at least one high resolution camera and the sensor center of the LIDAR sensor may be relatively close to each. In some embodiments, the at least one high resolution camera and the at least one LIDAR sensor may be mounted on the cabin 402 of the agricultural vehicle 106. Furthermore, in some embodiments, a distance between an optical center of the at least one high resolution camera and a sensor center of the LIDAR sensor may be within a range of about 0cm and about 50cm. In additional embodiments, the distance between the optical center of the at least one high resolution camera and the sensor center of the LIDAR sensor may be within a range of about 0cm and about 25cm. In yet further embodiments, the distance between the optical center of the at least one high resolution camera and the sensor center of the LIDAR sensor may be within a range of about 0cm and about 10cm. In yet further embodiments, the distance between the optical center of the at least one high resolution camera and the sensor center of the LIDAR sensor may be within a range of about 0cm and about 5cm. In yet further embodiments, the distance between the optical center of the at least one high resolution camera and the sensor center of the LIDAR sensor may be within a range of about 0cm and about 2cm. The high-resolution camera may include a camera having a relatively high megapixel (MP) count (e.g., at least 20 MP), capable of capture wider rangers of light and dark, relatively fast and accurate autofocus systems, and/or built in stabilization.

In one or more embodiments, one or more of the sensors 210 may include a polarized camera (e.g., a polarized NIR, RGB, or SWIR camera). In particular, one or more of the sensors 210 may include one or more polarization filters that separate incoming light into polarized components. Furthermore, the polarized camera may include micro-polarizers integrated directly on the image sensor portion of the polarized camera that filter the incoming light for each detected pixel based on the pixel's polarized state (e.g., 0°, 45°, 90°, 135°). In one or more embodiments, the polarized camera may be configured to capture multiple images simultaneously with each captured image correlated to a different polarization state. Moreover, one or more algorithms may be utilized to process the images captured at different polarizations and generate relatively detailed images that can highlight features not typically visible in standard intensity-based imaging.

In some embodiments, the one or more sensors 210 include a stereo camera system including at least a first stereo camera and a second stereo camera. The first stereo camera and the second stereo camera may be mounted to the cabin 402 of the agricultural vehicle 106. For example, the each of the first stereo camera and the second stereo camera may be mounted on or proximate opposing lateral sides of the cabin 402 of the agricultural vehicle 106. The foregoing placement of the first stereo camera and the second stereo camera may enable a relatively wide perspective to capture large areas. The placement ensures that the cart management system 202 may detect and align the cart 108 with the trailer 408 of the transport vehicle 104 from a broad field of view, enhancing an overall accuracy of the alignment process. In additional embodiments, the first stereo camera and the second stereo camera may be mounted on the cabin at different elevations (e.g., in a parallel configuration) where the angular centers of the fields of view of the first stereo camera and the second stereo camera are parallel to each other. In further embodiments, the first stereo camera and the second stereo camera may be mounted on one or more of the hood of the agricultural vehicle 106 or side walls of the cart 108.

The first and second stereo cameras may be mounted a fixed distance from each other (e.g., apart). The fixed distance can be referred to as the baseline. In some embodiments, the first distance may be at least 0.5m. As a result, the first and second stereo cameras may be able to capture image data of a same scene from slightly different angles. By comparing first image data captured by the first stereo camera and the second image data captured by the second stereo camera, the cart management system may calculate a disparity between corresponding points within the first and second image data, which may be used to determine depth information. The foregoing process, also referred to as "stereo vision," enables creation of 3D models and depth maps (e.g., depth data). Each of first and second stereo cameras may include any of the cameras described herein. For example, each of first and second stereo cameras may include one or more of a monochrome camera, RGB camera, infrared camera, high-resolution camera, global shutter camera, rolling shutter camera, or a time-of-flight (ToF) camera. Furthermore, in some embodiments, each of the first and second stereo cameras may, respectively, include a plurality of cameras.

The sensors 210 may be configured to capture sensor data including one or more of relatively high resolution color images/video, relatively high resolution infrared images/video, or light detection and ranging data. In some embodiments, the sensors 210 may be configured to capture sensor data at multiple focal lengths. In some embodiments, the sensors 210 may be configured to combine multiple exposures into a single high-resolution image/video. In some embodiments, each of the sensors 210 may include multiple image sensors (e.g., cameras) with fields of view facing different directions.

As noted above, in some embodiments, the sensors 210 may include a radio detection and ranging (RADAR) device. Furthermore, the RADAR device may include a synthetic aperture radar (SAR), or an inverse synthetic aperture radar (ISAR) configured to facilitate receiving relatively higher resolution data compared to conventional radars. The RADAR device may be configured to scan the radar signal across a range of angles to capture a 2D representation of the environment, each pixel representing the radar reflectivity at a specific distance and angle. In other embodiments, the RADAR device includes a 3D radar configured to provide range (e.g., distance, depth), velocity (also referred to as "Doppler velocity"), azimuth angle, and elevational angle. The RADAR device may be configured to provide a 3D radar point cloud to the cart management system 202.

The radar data may include one or more of analog-to-digital (ADC) signals, a radar tensor (e.g., a range-azimuth-doppler tensor), and a radar point cloud. In some embodiments, the output radar data includes a point cloud, such as a 2D radar point cloud or a 3D radar point cloud (also, simply referred to herein as a "3D point cloud"). In some embodiments, the output radar data includes a 3D radar point cloud.

In some embodiments, the cart management system 202 may include or be operably coupled to one or more additional sensors 212. The additional sensors 212 may include any of the sensors described in regard to the one or more sensor 210. Furthermore, the additional sensors 212 may be mounted on one or more of the agricultural vehicle 106 or the cart 108. In some embodiments, one or more of the additional sensors 212 includes a field of view that faces forward on the agricultural vehicle 106 (e.g., in a direction of travel of the agricultural vehicle). In some embodiments, one or more of the additional sensors 212 includes a field of view that faces an interior of the hopper 112 of the cart 108. In other words, one or more of the additional sensors 212 includes a field of view that views (e.g., encompasses) a commodity within the hopper 112 of the cart 108.

Referring still to FIG. 1 through FIG. 3 together, in some embodiments, the cart management system 202 may optionally include a Global Navigation Satellite System (GNSS) receiver 214 ("GNSS receiver 214") configured to determine precise geographical location, velocity, and time by processing signals received from multiple satellites within global constellations such as GPS, GLONASS, Galileo, and BeiDou. In particular, during operation, the GNSS receiver 214 may at least substantially continuously acquire and track satellite signals and calculate time delays between signal transmission and reception to compute pseudoranges, which are then used to determine a position of the GNSS receiver 214 through trilateration. For example, the GNSS receiver 214 may utilize various algorithms and signal processing techniques to correct for various errors and ensure a relatively high accuracy. The GNSS receiver 214 may operate in conventional manners and may provide GNSS data to the cart management system 202. In some embodiments, the cart management system 202 may utilize sensor data acquired via the perception system 208 combined with GNSS data (e.g., position data) and/or IMU data to monitor and control the unloading system 116 of the cart 108, validate orientations of an auger system of the unloading system 116, align the cart 108 relative to a combine harvester during a harvesting operation, align the cart 108 relative to a selected transport vehicle 104, orient the cart 108 relative to the agricultural vehicle 106, and/or unload a commodity from the cart 108 to a selected transport vehicle 104. For example, as is described in greater detail below, in some embodiments, sensor data, GNSS data, and IMU data may be fused together to form enhanced fused data, and the enhanced fused data may be utilized to perform any of the foregoing acts. In some embodiments, as is described below, one or more sensor fusion algorithms may be utilized to combine the sensor data with GNSS data and/or IMU data.

The control system 204 and/or the cart management system 202 may optionally include a wireless transceiver 216 for communicating via one or more wireless networks, such as, for example, WI-FI, Bluetooth, cellular, Li-Fi, Zigbee, Z-wave, and radio waves. In some embodiments, the wireless transceiver 216 may include a multi-protocol wireless receiver. The cart management system 202 may communicate with the transport vehicles, remote devices, and/or the input/output device 206 via the wireless transceiver 216.

In some embodiments, as noted above, the input/output device 206 may be remote from the cart management system 202 and may allow an operator of the agricultural vehicle 106 to provide input to, receive output from, and otherwise transfer data to and receive data from cart management system 202 of the control system 204. In some embodiments, the input/output device 206 may be within the cabin of the agricultural vehicle 106. In other embodiments, the input/output device 206 may be remote from agricultural vehicle 106. The input/output device 206 may include a mouse, a keypad or a keyboard, a joystick, a touch screen, a camera, an optical scanner, network interface, modem, other known I/O devices, or a combination of such I/O interfaces. The input/output device 206 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 206 is configured to provide graphical data to a display for presentation to an operator. The graphical data may be representative of one or more graphical user interfaces and/or any other graphical content as may serve a particular implementation. As is described in greater detail below, the control system 204 and the input/output device 206 may be utilized to display data (e.g., images and/or video data) received from the one or more cart management systems 202 and provide one or more recommendations of adjusting operation of the agricultural vehicle 106 and/or the cart 108 and/or video data to assist an operator in navigating the agricultural vehicle 106 and/or the cart 108.

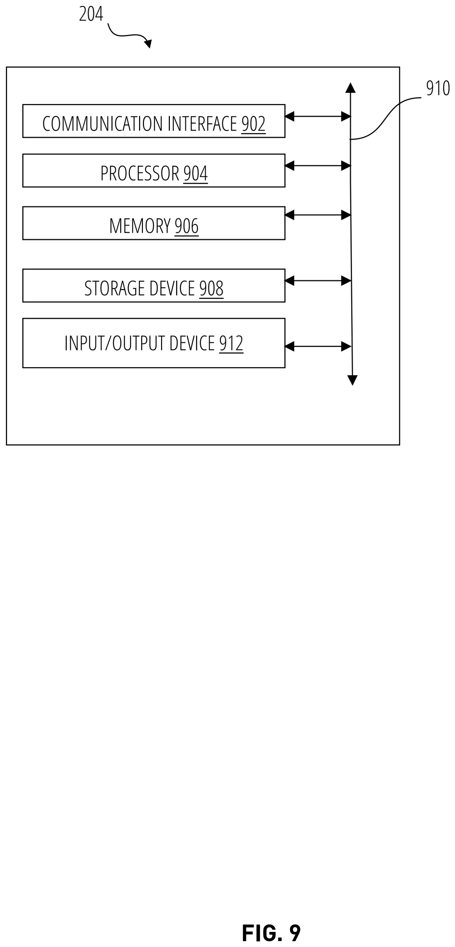

In some embodiments, the input/output device 206 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 9. Likewise, the control system 204 may include various types of computing devices. The control system 204 is described in greater detail below in regard to FIG. 9.

Referring still to FIG. 1 through FIG. 3, while the cart management system 202 is described as being part of the control system 204 of the agricultural vehicle 106, the disclosure is not so limited. Rather, the cart management system 202 may be part of (e.g., operated on) another device in communication with the control system 204 of the agricultural vehicle 106. In further embodiments, the cart management system 202 may be part of or operated on one or more servers or remote devices in communication with the control system 204. Additionally, while FIG. 2 through FIG. 3 show the cart management system 202 as being part of and/or utilized in relation to operation of an agricultural vehicle 106 and a cart 108, the disclosure is not so limited. Rather, the cart management system 202 may be part of and/or utilized in relation to operation of any agriculture vehicle (e.g., a combine) and/or implement.

As is described in greater detail below, the cart management system 202 may enable the autonomous agricultural system 102 to detect and select an appropriate transport vehicle 104 into which the autonomous agricultural system 102 may unload a commodity (e.g., grain) subsequent to receiving the commodity from a harvester (e.g., combine harvester). For example, responsive to approaching an unloading gate and/or unloading area of an agricultural field (e.g., a designated area or structure where harvested crops are intended to be transferred from field equipment, like combines or grain carts, to transport vehicles or storage facilities), the control system 204 of the agricultural vehicle 106 may cause the sensors 210 of the control system 204 to detect vehicles (e.g., transport vehicles 104) within a given vicinity, select a transport vehicle 104, guide the agricultural vehicle 106 and cart 108 to the selected transport vehicle 104, and align the agricultural vehicle 106 and cart 108 with the transport vehicle 104.

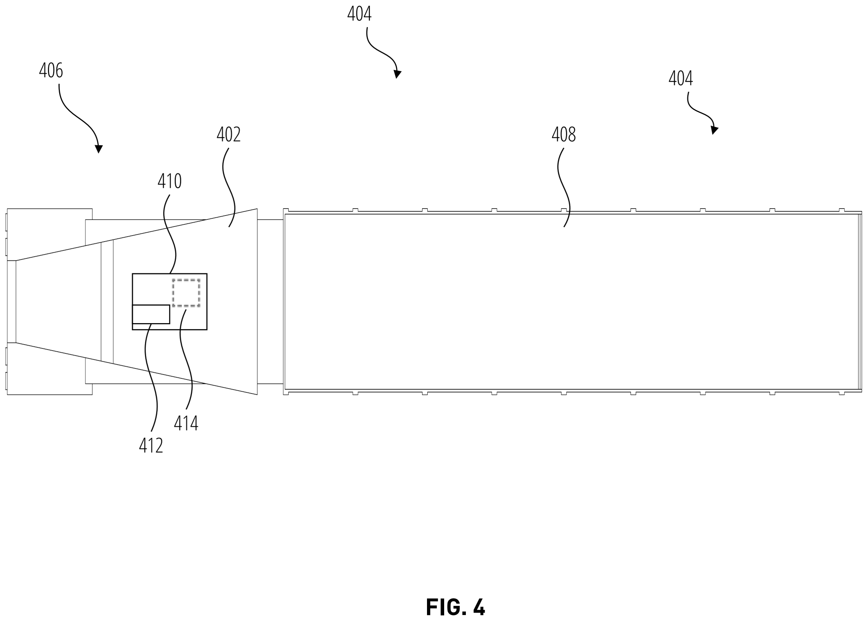

FIG. 4 is a simplified top view of a transport vehicle 404 (e.g., transport vehicle 104) according to one or more embodiments of the disclosure. The transport vehicle 404 may include a truck portion 406 having a cabin 402 and a trailer 408 coupled to the truck portion 406. Furthermore, the transport vehicle 404 may include a computing device 410 associated with (e.g., configured to communicate with) the cart management system 202 (FIG. 2) of the autonomous agricultural system 102 (FIG. 2).

The computing device 410 may include any suitable computing device with which operators can interact. For example, the computing device 410 may be a mobile device (e.g., a cell phone, a smartphone, a PDA, a tablet, a laptop, a watch, a wearable device, a smart speaker, etc.). In some embodiments, however, the computing device 410 may be a non-mobile device (e.g., a desktop or server). Additional details with respect to the computing device 410 are discussed below with respect to FIG. 9.

Regardless, the computing device 410 may include a wireless transceiver 412 for communicating via one or more wireless networks, such as, for example, WI-FI, Bluetooth, cellular, Li-Fi, Zigbee, Z-wave, and radio waves. In some embodiments, the wireless transceiver 412 may include a multi-protocol wireless receiver. The computing device 410 may communicate with the cart management system 202 (FIG. 2) of the autonomous agricultural system 102 via the wireless transceiver 412.

As is discussed in greater detail below, in some embodiments, the computing device 410 may be configured to communicate a GNSS location of the transport vehicle 404 (e.g., a respective transport vehicle) via the wireless transceiver 412. In particular, the computing device 410 may be configured to communicate a GNSS location of the transport vehicle 404 to the cart management system 202 of the autonomous agricultural system 102. The GNSS location of the transport vehicle 404 can then be utilized by the autonomous agricultural system 102 to select an appropriate transport vehicle 404, and ultimately, guide the autonomous agricultural system 102 to the appropriate transport vehicle 404. In some embodiments, the computing device 410 may include or be operably coupled to a respective GNSS receiver 414. The GNSS receiver 414 may include any of the GNSS receivers described herein.

In additional embodiments, the computing device 410 may be configured to communicate (e.g., output) directional radio signals (e.g., ultra-high frequency radio signals) via the wireless transceiver 412. The cart management system 202 can receive the directional radio signals and can then use the received directional radio signals to select an appropriate transport vehicle 404, and ultimately, guide the autonomous agricultural system 102 to the appropriate transport vehicle 404.

In one or more embodiments, the computing device 410 may initiate communication (e.g., outputs and/or inputs) via the wireless transceiver 412 responsive to the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the computing device 410 may initiate communication (e.g., transmission and/or reception of communication) via the wireless transceiver 412. In particular, the computing device 410 may monitor or be in communication with a device that monitors a geofence and/or virtual boundary.

FIG. 5 shows a front side view of the cart 108 according to one or more embodiments of the disclosure. As noted above, the cart 108 may include an unloading system 116. The unloading system 116 may be utilized to unload the commodity from the hopper 112 and into one or more of the plurality of transport vehicles 104. As mentioned above, the unloading system 116 may include an auger system 502 including an auger 504 and a hydraulic motor 506. The auger 504 may include an upper vertical auger portion 508 and a lower vertical auger portion 510.

FIG. 5 depicts the auger 504 of the auger system 502 in an unfolded state (e.g., an extended state) for an unloading process. As shown in FIG. 5, when the auger of the auger system 502 is in a first unfolded state (e.g, extended state, unload state), the upper vertical auger portion 508 and the lower vertical auger portion 510 may be aligned relative to one another and may share a common center longitudinal axis. In other words, a center longitudinal axis of the upper vertical auger portion 508 may be collinear with a center longitudinal axis of the lower vertical auger portion 510. Moreover, the upper vertical auger portion 508 and the lower vertical auger portion 510 may defined a single, at least substantially straight, pathway (e.g., tube) for the commodity to travel through.

The auger 504 of the auger system 502 may be configurable in a folded state (e.g., retracted state, storage state, field state) as well. When the auger of the auger system 502 is in a folded state (e.g, retracted state), the upper vertical auger portion 508 and the lower vertical auger portion 510 may be unaligned relative to one another and may not share a common center longitudinal axis. Rather, a center longitudinal axis of the upper vertical auger portion 508 may be oriented at an acute angle relative to the lower vertical auger portion 510. Furthermore, in the folded state and retracted state, the auger 504 may be folded back on itself. When the auger 504 of the cart 108 is in the folded state (e.g, a retracted state), the auger may be against the hopper 112 of the cart 108. The folded state (e.g., a retracted state) may be used during transport or storage to reduce the cart's 108 width and prevent damage to the auger 504.

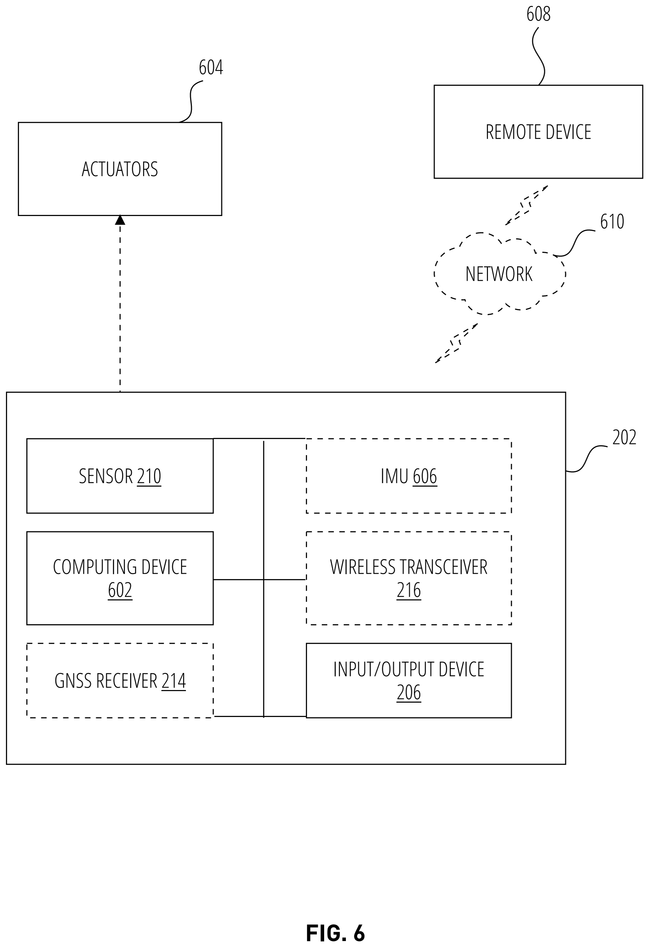

FIG. 6 is a schematic view of a cart management system 202 according to one or more embodiments of the disclosure. In one or more embodiments, the cart management system 202 may include a computing device 602, an input/output device 206, and one or more sensors sensor 210. The one or more sensors 210 and the input/output device 206 may be in operable communication with the computing device 602 and may be configured to provide data to and/or receive data and/or signals from the computing device 602. In additional embodiments, the one or more sensors 210 and/or the input/output device 206 may be separate and distinct from the cart management system 202 (e.g., as partially depicted in FIG. 1) and may be in operable communication with the cart management system 202. The computing device 602 may optionally be further operably coupled to actuators 604 of an agricultural vehicle (e.g., agricultural vehicle 106) and/or a cart (e.g., cart 108). The actuators 604 may include hydraulic valves, power switches, and/or any other known actuators for controlling operation of agricultural vehicles and carts (e.g., grain carts).

The one or more sensors 210 may include any of the sensors 210 described above in regard to FIG. 1 and FIG. 2 or any combination thereof.

As is described in greater detail below, the computing device 602 may include a communication interface, a processor, a memory, a storage device, the input/output device 206, and a bus. The computing device 602 is described in greater detail in regard to FIG. 9. In input/output device 206 may include any of the input/output devices 206 described above. In some embodiments, the cart management system 202 may not be coupled to actuators 604 of an agricultural vehicle and/or a cart.

Referring still to FIG. 6, in some embodiments, the cart management system 202 may optionally include an inertial measurement unit (IMU 606). The IMU 606 may be operably coupled to the computing device 602 and may provide measured and/or calculated data to the computing device 602. The IMU 606 may include a device that is configured to measure and output specific force, attitude, velocity, angular rate, and/or an orientation of a moving object (e.g., an agricultural vehicle) relative to a reference frame. The IMU 606 may combine accelerometers (for linear acceleration) and gyroscopes (for rotational rate) to determine the object's motion. In one or more embodiments, the IMU 606 may also include one or more magnetometers for heading reference.

Additionally, as noted above, the cart management system 202 may optionally include a GNSS receiver 214. The GNSS receiver 214 may be configured to determine precise geographical location, velocity, and time by processing signals received from multiple satellites within global constellations such as GPS, GLONASS, Galileo, and BeiDou. In particular, during operation, the GNSS receiver 214 may at least substantially continuously acquire and track satellite signals and calculate time delays between signal transmission and reception to compute pseudoranges, which are then used to determine a position of the GNSS receiver 214 through trilateration. For example, the GNSS receiver 214 may utilize various algorithms and signal processing techniques to correct for various errors and ensure a relatively high accuracy. The GNSS receiver 214 may operate in conventional manners and may provide GNSS data to the cart management system 202.

Furthermore, as noted above, the cart management system 202 may optionally include a wireless transceiver 216 for communicating via one or more wireless networks, such as, for example, WI-FI, Bluetooth, cellular, Li-Fi, Zigbee, Z-wave, and radio waves. In some embodiments, the wireless transceiver 216 may include a multi-protocol wireless receiver. The cart management system 202 may communicate with the transport vehicles, remote devices, and/or the input/output device 206 via the wireless transceiver 216.

As mentioned above, the input/output device 206 may be remote from the cart management system 202 and may allow an operator of the agricultural vehicle 106 to provide input to, receive output from, and otherwise transfer data to and receive data from cart management system 202 of the control system 204. In some embodiments, the input/output device 206 may be within the cabin of the agricultural vehicle 106. In other embodiments, the input/output device 206 may be remote from agricultural vehicle 106. The input/output device 206 may include a mouse, a keypad or a keyboard, a joystick, a touch screen, a camera, an optical scanner, network interface, modem, other known I/O devices, or a combination of such I/O interfaces. The input/output device 206 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 206 is configured to provide graphical data to a display for presentation to an operator. The graphical data may be representative of one or more graphical user interfaces and/or any other graphical content as may serve a particular implementation. As is described in greater detail below, the control system 204 and the input/output device 206 may be utilized to display data (e.g., images and/or video data) received from the one or more cart management systems 202 and provide one or more recommendations of adjusting operation of the agricultural vehicle 106 and/or the cart 108 and/or video data to assist an operator in navigating the agricultural vehicle 106 and/or the cart 108.

In some embodiments, the input/output device 206 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 9. Likewise, the control system 204 may include various types of computing devices. The control system 204 is described in greater detail below in regard to FIG. 9.

In some embodiments, the cart management system 202 may be in communication with (e.g., be operably coupled) to one or more remote devices 608. The one or more remote devices 608 can represent various types of computing devices with which users can interact. For example, the one or more remote devices 608 can be a mobile device (e.g., a cell phone, a smartphone, a PDA, a tablet, a laptop, a watch, a wearable device, etc.). In some embodiments, however, the one or more remote devices 608 can be a non-mobile device (e.g., a desktop or server). In some embodiments, the one or more remote devices 608 include one or more servers (e.g., computer or software systems) configured to provide services, data, or resources to other computers over a network. Furthermore, in some embodiments, the one or more remote devices 608 and the input/output device 206 may be a same device. Furthermore, the one or more remote devices 608 may perform and/or assist in performing any of the actions and processes attributed to the cart management system 202.

The cart management system 202 may communicate with the one or more remote devices 608 via a network 610. The network 610 may include one or more networks, such as the Internet, and can use one or more communications platforms or technologies suitable for transmitting data and/or communication signals.

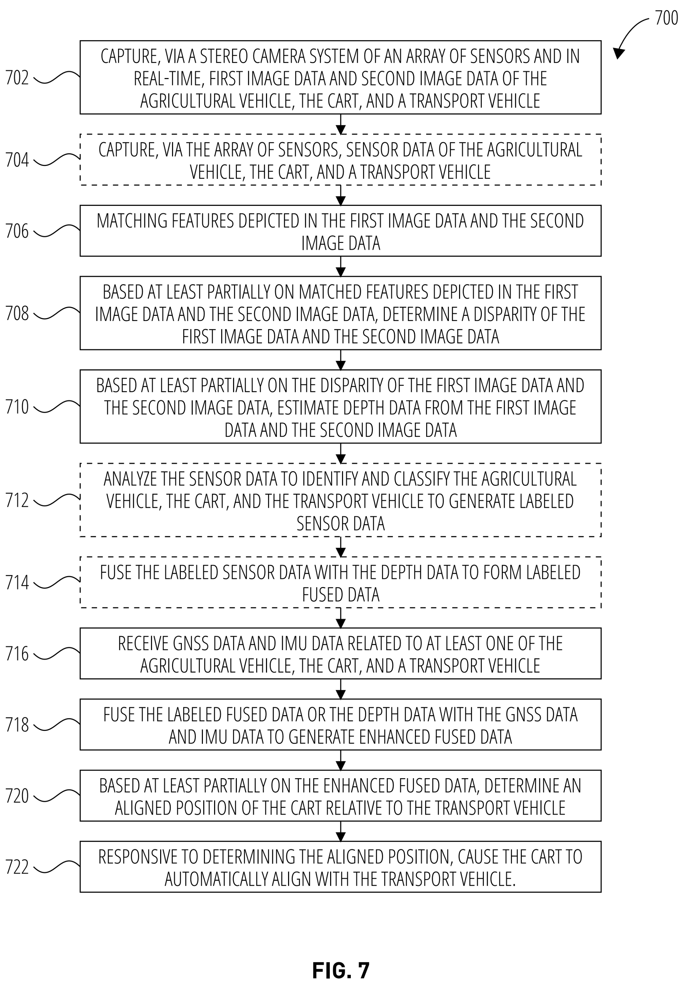

FIG. 7 shows a flowchart of a method 700 of monitoring and controlling operation of a cart (e.g., cart 108) and/or agricultural vehicle (e.g., agricultural vehicle 106) (e.g., a tractor). In one or more embodiments, a cart management system (e.g., cart management systems 202) may perform one or more acts of the method 700. For purposes of description of FIG. 7, the cart management system 202 is described as performing one or more acts of the method 700; however, it is understood that, in some embodiments, one or more acts of the method 700 may be performed by the control system 204 of the agricultural vehicle 106 and/or one or more remote devices (e.g., remote devices 608). Furthermore, although the example method 700 depicts a particular sequence of operations, the sequence may be altered without departing from the scope of the present disclosure. For example, some of the operations depicted may be performed in parallel or in a different sequence that does not materially affect the function of the method 700. In other examples, different components of an example device or system that implements the method 700 may perform functions at substantially the same time or in a specific sequence.

The method 700 may include capturing, via a stereo camera system of the array of sensors and in real-time, first image data and second image data of the agricultural vehicle 106, the cart 108, and a transport vehicle 104, as show in act 702 of FIG. 7. For example, the cart management system 202 may cause the stereo camera system of the array of sensors 210 to capture in real-time, first image data and second image data of the agricultural vehicle 106, the cart 108, and the transport vehicle 104. In some embodiments, capturing, via the stereo camera system and in real-time, the first image data and the second image data of the agricultural vehicle 106, the cart 108, and a transport vehicle 104 may include capturing representations of the agricultural vehicle 106, the cart 108, and the transport vehicle 104 within the first and second image data. The first and second image data may include any of the types of image data described herein. Furthermore, in some embodiments, the cart management system 202 may utilize any of the additional sensors 212 described herein to capture one or more portions of the first image data and/or second image data. In some embodiments, the first and second image data may be captured in real-time and/or continuously. Additionally, in some embodiments, the stereo camera system may include at least a first stereo camera and at least a second stereo camera. The first stereo camera and the second stereo camera may have any of the configurations described above in regard to FIG. 2 and FIG. 3. Furthermore, the first stereo camera and the second stereo camera may include any of the types of cameras described above in regard to FIG. 2 and FIG. 3

In some embodiments, capturing the first image data and the second image data via the stereo camera system may be triggered by the autonomous agricultural system 102 (FIG. 2) approaching or leaving an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the cart management system 202 of the autonomous agricultural system 102 may cause the stereo camera system to capture the first image data and the second image data related to the agricultural vehicle, the cart 108, and the transport vehicle 104. In additional embodiments, the cart management system 202 of the autonomous agricultural system 102 may monitor or be in communication with a device that monitors a geofence and/or virtual boundary and may cause the stereo camera system to capture the first image data and the second image data related to the agricultural vehicle, the cart 108, and a transport vehicle 104 responsive to crossing the geofence and/or virtual boundary. As a result of the foregoing, capturing the first and second image data may be triggered prior to or subsequent to an unloading process. In some embodiments, capturing the first and second image data may be triggered by initiating or completing an unloading process. In some embodiments, capturing the first and second image data may be triggered by the agricultural vehicle 106 aligning with a selected transport vehicle 104.

In one or more embodiments, capturing the first and second image data may be triggered by one or more events. The events may include alignment with a transport vehicle 104, initiation of an unloading process, alignment with an agricultural harvester, or any other event. In some embodiments, capturing the first and second image data may be performed at least substantially continuously throughout the agricultural process (e.g., harvesting process) or a portion of the agricultural process.

The method 700 may optionally include capturing, via an array of sensors 210 mounted on one or more of the agricultural vehicle 106 or the cart 108 and in real-time, sensor data of the agricultural vehicle, the cart 108, and a transport vehicle 104, as show in act 704 of FIG. 7. For example, the cart management system 202 may cause the array of sensors 210 to capture sensor data of the cart 108 and the auger system 502 of the unloading system 116 of the cart 108. In some embodiments, capturing sensor data of the agricultural vehicle, the cart 108, and a transport vehicle 104 may include capturing representations of the agricultural vehicle, the cart 108, and a transport vehicle 104 within the sensor data. The one or more sensors 210 may include any of the sensors described herein, and the sensor data may include any of the sensor data described herein. Furthermore, in some embodiments, the cart management system 202 may utilize any of the additional sensors 212 described herein to capture one or more portions of the sensor data. In some embodiments, the image data may be captured in real-time and/or continuously.

In some embodiments, capturing the sensor data may be triggered by the autonomous agricultural system 102 (FIG. 2) approaching or leaving an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the cart management system 202 of the autonomous agricultural system 102 may cause the one or more sensors 210 to capture sensor data related to the agricultural vehicle, the cart 108, and the transport vehicle 104. In additional embodiments, the cart management system 202 of the autonomous agricultural system 102 may monitor or be in communication with a device that monitors a geofence and/or virtual boundary and may cause the one or more sensors 210 to capture sensor data related to the agricultural vehicle, the cart 108, and a transport vehicle 104 responsive to crossing the geofence and/or virtual boundary. As a result of the foregoing, capturing the sensor data may be triggered prior to or subsequent to an unloading process. In some embodiments, capturing, via the array of sensors and in real-time, sensor data of the agricultural vehicle, the cart 108, and a transport vehicle 104 may be triggered by initiating or completing an unloading process. In some embodiments, capturing, via the array of sensors and in real-time, sensor data of the agricultural vehicle, the cart 108, and a transport vehicle 104 may be triggered by the agricultural vehicle 106 aligning with a selected transport vehicle 104.

In one or more embodiments, capturing the sensor data may be triggered by one or more events. The events may include alignment with a transport vehicle 104, initiation of an unloading process, alignment with an agricultural harvester, or any other event. In some embodiments, capturing the sensor data may be performed at least substantially continuously throughout the agricultural process (e.g., harvesting process) or a portion of the agricultural process.

The method 700 may further include matching features depicted in the first image data and the second image data, as shown in act 706 of FIG. 7. For example, the cart management system 202 may match features depicted in the first image data and the second image data.

Matching features depicted in the first image data and the second image data may include detecting features in both of the first image data and the second image data. For instance, the cart management system 202 may utilize algorithms such as Scale-Invariant Feature Transform (SIFT), Speeded-Up Robust Features (SURF), and Oriented FAST and Rotated BRIEF (ORB). The cart management system 202 may identify key points in the first and second image data that are invariant to scale, rotation, and illumination changes.

Additionally, matching features depicted in the first image data and the second image data may include, once key points are detected, determining descriptors for each of the key points. The descriptors may include a vectors that capture image information around each respective key point.

Furthermore, matching features depicted in the first image data and the second image data may include matching descriptor from the first image data with descriptors of the second image data. The descriptors may be matches using a distance metric, such as the Euclidean distance, to find closest matches between descriptors. Additionally, the cart management system 202 may utilize algorithms such as, for example, a Brute-Force Matcher or Fast Library for Approximate Nearest Neighbors (FLANN) to match descriptors. Based on matched descriptors, matched features may be determined.

Based at least partially on matched features depicted in the first image data and the second image data, the method 700 may include determining a disparity of (e.g., between) the first image data and the second image data, as shown in act 708 of FIG. 7. For example, the cart management system may, based at least partially on matched features depicted in the first image data and the second image data, the method 7000 may include determining a disparity of (e.g., between) the first image data and the second image data. For each matched pair of points (e.g., features) between the first image data and the second image data, the disparity may include a distance between the positions of the corresponding points in the first image data and the second image data (e.g., left and right images when the first and second stereo cameras are spaced apart from each other horizontally). As a no-limiting example, if *x_{L}* and *x_{R}* are the x-coordinates of a corresponding point in left and right images, respectively, the disparity *d* is given by: $d = {x}_{L} - {x}_{R}$

In some embodiments, based on the calculated disparity of each matched point of the first and second image data, a disparity map may be generated, where each pixel value represents the disparity for that given point. The disparity map may be used to infer (e.g., estimate) depth information.

The method 700 may further include, based at least partially on the determined disparity (e.g., disparity map) of the first image data and the second image data, estimating depth data from the first image data and the second image data, as shown in act 710 of FIG. 7. For example, the cart management system 202 may, based at least partially on the determined disparity (e.g., disparity map) of the first image data and the second image data, estimate depth data from the first image data and the second image data. The depth data may include estimated distances of objects represented in first image data and the second image data from the respective stereo cameras. The distances may be estimated using the following formula: $Depth = \frac{f \times B}{d}$

where *f* is a focal length (e.g., distance between the lens and the image sensor when an object is in focus) of the first and second stereo cameras, *B* is a baseline distance between the first and second stereo cameras, and *d* is the determined disparity. A compilation to the estimated distances may form at least a part of the depth data.

In some embodiments, the cart management system 202 may estimate the depth data using a Recurrent All-Pairs Field Transforms (RAFT) algorithm that extracts features from the first and second image data using a CNN, constructing a four-dimensional correlation volume by determining a similarity between all pairs of pixels in the first and second image data, using a recurrent neural network (RNN) to iteratively update calculations, and using a context network to determine and provide additional information about areas surrounding each pixel.

The method 700 may optionally further include analyzing the sensor data to identify and classify the agricultural vehicle 106, the cart 108, and the transport vehicle 104 to generate labeled sensor data, as shown in act 712 of FIG. 7. For example, the cart management system 202 may analyze the sensor data to identify and classify the agricultural vehicle 106, the cart 108, and the transport vehicle 104 to generate labeled sensor data.

The sensor data may be analyzed to identify and classify objects (e.g., the agricultural vehicle 106, the cart 108, the transport vehicle 104, living organisms, obstacles) depicted within the sensor data. For example, the cart management system 202 may analyze the sensor data to identify and classify objects depicted in the sensor data. In some embodiments, the cart management system 202 may determine bounding boxes (e.g., a point, width, and height) of the detected objects. In additional embodiments, the cart management system 202 may perform object segmentation (e.g., object instance segmentation or sematic segmentation) to associate specific pixels of the sensor data with the detected one or more objects. In further embodiments, the cart management system 202 may classify (e.g., label) the detected objects according to determined object types.

In some embodiments, the sensor data may be analyzed via deep learning techniques (e.g., deep neural networks) to detect and classify the objects within the sensor data. For example, the cart management system 202 may utilize one or more of deep neural network (DNN) instance models, convolutional neural networks (CNNs), single shot detectors (SSDs), region-convolutional neural networks (R-CNNs), Faster R-CNN, Region-based Fully Convolutional Networks (R-FCNs) and other machine learning models to perform the object detection and classification. In some embodiments, analyzing the sensor data may be performed utilizing one or more other or additional algorithms or models, such as, a YOLO (You Only Look Once) algorithm, Single Shot MultiBox Detector, EfficientDet, RetinaNet, DeepLab, U-Net, or MobileNet.

Any of the foregoing models may be trained to perform object detection and classification. For example, in some embodiments, the models may be trained using a combination of real sensor data (e.g., sensor data captured via one or more sensors) and synthetic data (e.g., data that is artificial generated using algorithms and/or computer simulations). In some embodiments, the synthetic data may include sensor data depicting objects of interest (e.g., transport vehicles, agricultural vehicles, carts, living organisms, telecommunication boxes, safety poles, power boxes, road markers, road signs, etc.) with differing environments (e.g., types, amounts, and heights of vegetation, occlusion levels, light configurations, viewing angles and types (e.g., fish eye and perspective)).

In one or more embodiments, analyzing the sensor data to identify and classify the agricultural vehicle 106, the cart 108, and the transport vehicle 104 may include performing semantic segmentation on the sensor data. Performing the semantic segmentation may include classifying each pixel in a given image into a specific category, such as "agricultural vehicle," "trailer," "transport truck," "cart," or "background." The pixel-level classification may ensure precise identification and differentiation between various objects (e.g., components) within a scene captured within the sensor data.

Referring still to act 712 of FIG. 7, in some embodiments, sensor data from multiple sensors 210 (e.g., sensor data from sensors 210) may be combined to generate combined sensor data, and the cart management system 202 may perform the one or more object detection operations on the combined sensor data, and the combined sensor data may be analyzed to generate the labeled sensor data. In other embodiments, the cart management system 202 performs the one or more object detection operations on the sensor data from each sensor 210 individually and generates labeled sensor data based on the sensor data from each sensor 210. In some embodiments, the cart management system 202 is configured to perform object tracking operation on the detected objects in the labeled sensor data, each tracked object defined by pixels of the sensor data (e.g., color data, SWIR data, NIR data). In some embodiments, the sensors 210 include at least partially overlapping fields of view 302. In additional embodiments, the sensor 210 may not include overlapping fields of view 302.

In one or more embodiments, the object segmentation (e.g., semantic segmentation) operation may be performed on the sensor data from each sensor 210 separately or may be performed on combined sensor data. In some embodiments, the object segmentation operation includes an instance segmentation operation. The object detection, object segmentation, and/or object tracking may be performed using an object detection neural network specifically trained for identifying and labeling one or more agricultural objects to generate the labeled sensor data. The object detection neural network may include associations between different types of agricultural objects (e.g., the agricultural vehicle 106 (e.g., tractor), the cart 108, the unloading system 116, the transport vehicle 104, etc.), which may be provided in metadata of the labeled sensor data. In embodiments where the sensor data has been segmented, the sensor data may not include pixels that have not been labeled as an object and/or have been labeled as an object of interest (e.g., an agricultural object) (background pixels).

In some embodiments, the analyzing the sensor data to identify and classify the agricultural vehicle 106, the cart 108, and the transport vehicle 104 may include detecting features of detected objects. As used herein "features" refers to specific identifiable parts and/or characteristics of objects captured in the sensor data. The features may include elements such as the wheels 110, the cabin 402, the hopper 112, the unloading system 116, the trailer 408 of a transport vehicle 104, etc. The features may be detected and classified using any of the techniques described herein.

Method 700 may optionally further include fusing the labeled sensor data with the depth data to form labeled fused data, as shown in act 714 of FIG. 7. For example, the cart management system 202 may fuse the labeled sensor data with the depth data by correlating each point and/or pixel of the depth data with detected features and/or objects of the labeled sensor data to form labeled fused data. In some embodiments, two-dimensional image features of the labeled sensor data are mapped onto 3D point-cloud data of the depth data. Mapping the two-dimensional image features of the labeled sensor data onto the 3D point-cloud data of the depth data may include aligning coordinate systems of the sensors 210 utilized to capture the sensor data of the labeled sensor data and stereo camera system utilized to capture the depth data. Techniques such as image registration and transformation matrices may be used to achieve the alignment. Additionally, each point in the 3D point-cloud data may be matched with a corresponding feature in the 2D image data. For example, points in the 3D point-cloud data that represent the hopper 112 of the cart 108 may matched with hopper features detected in the 2D image data.

In some embodiments, fusing the labeled sensor data with the depth data may include fusing the labeled sensor data with the depth data via any of the manners described in U.S. Patent Applications No. 18/922,227, No. 18/922,252, No. 18/956,548, and No. 18/9222,267, to Christiansen et. al., filed on October 21, 2024. As a non-limiting example, labeled sensor data may be fused with the depth data using a fusion manager of the cart management system 202. The cart management system 202 may be configured to perform one or more or more sensor fusion operations to form labeled fused data including the labeled sensor data and the depth data. For example, the fusion manager of the cart management system 202 may be configured to project the depth data onto the labeled sensor data, such that the labeled fused data includes the labeled sensor data and the depth data in 2D space. In other words, in some such embodiments, the fusion of the labeled sensor data and the depth data occurs in 2D, and depth data is transposed into 2D space with the labeled sensor data and points in the depth data are matched to bounding boxes of objects (e.g., instances of objects and/or features labeled via the manners described herein) in the labeled sensor data. In some embodiments, the depth data includes more sparse data compared to the labeled sensor data. In some such embodiments, since the data fusion occurs in 2D, the data fusion may use less processing power and may process the data faster compared to data fusion in 3D.

Projecting the depth data onto the labeled sensor data may include formatting and aligning the depth data with the labeled sensor data, such as by aligning the timestamps of the depth data and labeled sensor data; transforming the 3D coordinates of the depth data to 2D using, for example, a projection matrix to map the 3D points onto a 2D plane (e.g., such as perspective projection or orthographic projection); and applying the projection matrix to each point in the depth data. In some embodiments, the point-cloud data of the depth data may be transformed into a lower-dimensional representation. For example, the cart management system 202 may transform the point-cloud data of the depth data utilizing a PointPillars algorithm. In some embodiments, transforming the point-cloud data of the depth data may include dividing the point-cloud data into vertical columns, or "pillars." Each pillar represents a small, localized region of a 3D space represented in the point-cloud data. In some embodiments, transformation of the point-cloud data of the depth data includes using a neural network, specifically PointNet, to encode features (e.g., coordinates of each point within a pillar, a strength of a reflected signal at each point of a pillar, a height of each point of a pillar relative to a ground surface, etc.). The encoding process reduces a dimensionality of the point-cloud data while preserving essential spatial information. By combining the 3D information from the point-cloud data with the visual information from labeled sensor data, the cart management system 202 may achieve a more comprehensive representations of the objects and environment depicted in the labeled sensor data.

The depth data may be projected onto the labeled sensor data with one or more fusion operations (e.g., fusion algorithms), such as MV3D, AVOD, voxels such as VoxelNet, F-PointNet, MVFP, and raw point clouds such as PointNet, PointNet++, and PointRCNN to convert the 3D data of the depth data to a 2D plane representation, such as a range view, spherical view, cylindrical view, or a bird's-eye view (BEV) projection techniques.

In some embodiments, the labeled fused data includes and corresponds to pixels of objects in the labeled sensor data and the depth data. In other words, pixels that do not include an object classification (e.g., an instance) may not be included in the labeled fused data. Stated another way, pixels of the background (not including objects) may be disregarded and may not be included in the labeled fused data. By way of non-limiting example, depth data may be projected onto the labeled sensor data and only pixels of the labeled fused data corresponding to the objects identified and classified in the labeled sensor data may be included in the labeled fused data. In other words, in some such embodiments, the labeled fused data may include only pixels corresponding to bounding boxes (discussed in greater detail below) of identified objects in the labeled sensor data and the corresponding data from the depth data.

In one or more embodiments, since the labeled sensor data fused with the depth data has been segmented, the fusion operation may be performed relatively faster and using less processing power compared to embodiments where the labeled sensor data has not been segmented. In other words, since the labeled sensor data fused with the depth data does not include the background pixels, the fusion operation may be performed significantly faster than conventional fusion operations. The faster fusion of the labeled sensor data and the depth data facilitates real-time object detection and avoidance during performance of one or more agricultural operations using the imaging controller.

As noted above, the cart management system 202 may determine bounding boxes (e.g., a point, width, and height) of objects detected in the labeled sensor data and/or the depth data by way of the transformation and segmentation processes described herein. In some embodiments, the bounding boxes may be determined during one or more of act 710 or act 712. In some embodiments, the cart management system 202 may define 3D bounding boxes around detected objections (e.g., the agricultural vehicle 106, the cart 108, the transport vehicle 104, etc.). The 3D bounding box may include a rectangular box that encapsulates a detected object in a 3D space. The 3D bounding boxes may be iteratively refined (e.g., boundaries of the bounding boxes may be iteratively adjusted) to ensure that the 3D bounding boxes accurately enclose detected objected. As a result, the 3D bounding boxes may provide relatively accurate representations of the positions and the orientations of each object detected in the labeled sensor data and the depth data.

In one or more embodiments, the cart management system 202 may integrate metadata into the labeled fused data to map classification onto 3D data (e.g., 3D point-cloud data). In some embodiments, the metadata may be integrated during one or more of act 710, act 712, or act 714. In some embodiments, the labeled fused data includes the metadata of the labeled sensor data and the metadata of depth data. By way of non-limiting example, each pixel of the labeled fused data may include one or more of (e.g., each of) RGB image data, SWIR image data, LWIR image data, a flag if pixels data from different sensors do not agree, priority data for pixels within overlapping fields of view of the sensor data, velocity, depth (e.g., distance) data, elevational data (e.g., elevational angle), azimuth data (e.g., azimuth angle), an object label (e.g., an instance label), association data, a timestamp, and metadata (e.g., object classification data, object association data, data with respect to which of multiple cameras the sensor data for each pixel is associated, flags for sensor data that does not match sensor data of another camera).

In some embodiments, the method 700 may not include fusing the labeled sensor data with the depth data, and acts 716 through 722 of method 700, described below, may be performed using the depth data determined from image data in act 710 and/or the captured image data itself without using sensor data otherwise captured and analyzed in acts 704, 712, and 714.

Additionally, the method 700 may include receiving or acquiring GNSS data and IMU data related to at least one of the agricultural vehicle 106, the cart 108, or the transport vehicle 104, as shown in act 716 of FIG. 7. For example, the cart management system 202 may receive or acquire the GNSS data and the IMU data related to at least one of the agricultural vehicle 106, the cart 108, or the transport vehicle 104. In some embodiments, the GNSS receiver 214 of the cart management system 202 may acquire the GNSS data via any of the manners described above. In one or more embodiments, the GNSS receiver 214 of the cart management system 202 may receive the GNSS data from the computing device 410 of the transport vehicle 104. In some embodiments, the GNSS data is received wirelessly through on or more wireless communication protocols. In one or more embodiments, the GNSS data may be received by way of a wireless transceiver (e.g., wireless transceiver 216) of the cart management system 202. The GNSS data may include coordinate data, altitude data, velocity data, and time data.

The IMU data may be acquired via the IMU 606 of the cart management system 202. The IMU data may include one or more of a specific force, an attitude, a velocity, an acceleration, an angular velocity, and/or an orientation of a moving object (e.g., agricultural vehicle) at a given time.

Moreover, the method 700 may further include fusing the labeled fused data or the depth data with the GNSS data and IMU data to generate enhanced fused data, as shown in act 718 of FIG. 7. For example, the cart management system 202 may fuse the labeled fused data or the depth data with the GNSS data and IMU data to generate enhanced fused data.

In some embodiments, the cart management system 202 may fuse the labeled fused data or the depth data with the GNSS data and IMU data via one or more sensor fusion algorithms and/or data fusion techniques (e.g., Kalman Filters, Extended Kalman Filters, Unscented Kalman Filters, Complementary Filters, Particle Filters, Asynchronous Multi-Sensor Fusion, Event-Based Fusion, Time-Delayed Integration, a Factor Graph Optimization (FGO) algorithm, a Visual-Inertial Odometry (VIO) algorithm, Simultaneous Localization and Mapping (SLAM)) to form the enhanced fused data. The data fusion techniques may include one or more of synchronous data fusion techniques or asynchronous data fusion techniques.

As a non-limiting example, the cart management system 202 may use the VIO algorithm to combine visual data of the labeled fused data or the depth data (e.g., data used to form the depth data) with IMU data from the IMU 606 to estimate motion of one or more of the agricultural vehicle 106, the cart 108, or the transport vehicle 104. The visual data provides information about a sensed environment, while the IMU data provides relatively accurate short-term motion estimates. By integrating the labeled fused data or the depth data with the IMU data, the cart management system 202 may achieve a relatively robust and accurate localization even in challenging conditions where GNSS signals might be weak or unavailable.

As another non-limiting example, the cart management system 202 may use the SLAM technique to identify and track features (e.g., objects) in image data of the labeled fused data or the depth data (e.g., data used to form the depth data), while using the GNSS data and the IMU data to determine additional positioning and motion information. By continuously updating a map of the perceived environment and the position of the agricultural vehicle 106, the cart 108, or the transport vehicle 104 via the SLAM technique, the cart management system 202 may achieve real-time localization and mapping, which may be used for autonomous navigation.

In view of the foregoing, the enhanced fused data may provide a relatively comprehensive map of the autonomous agricultural system's 102 (e.g., cart 108 and agricultural vehicle 106 combination's) surroundings, enabling precise navigation and path planning during agricultural processes. The enhanced fused data may enable the improved obstacle detection and avoidance. By fusing the labeled fused data or the depth data (e.g., perception data) with GNSS data and/or the IMU data to form the enhanced fused data, the cart management system 202 may achieve higher levels of autonomy, efficiency, and safety relative to conventional systems.

The method 700 may further include, based at least partially on the enhanced fused data, determining an aligned position of the cart relative to the transport vehicle, as shown in act 720 of FIG. 7. For example, the cart management system 202 may, based at least partially on the enhanced fused data, determine an aligned position of the cart 108 relative to a transport vehicle 104.

As used herein, an "aligned position" may refer to a position and an orientation of the cart 108 relative to a position and an orientation of a transport vehicle 104 that aligns the auger 504 of the auger system 502 and the cart 108, itself, for unloading a commodity into a trailer 408 of the transport vehicle. Put another way, the aligned position may represent a location and orientation of the cart 108 relative to the transport vehicle 104 that positions and orients the cart 108 such that the unloading system 116 (e.g., the auger 504 of the auger system 502) of the cart 108 can effectively and appropriately unload a commodity into the trailer 408 of the transport vehicle 104. In some embodiments, the aligned position may represent an optimized position and orientation of the cart 108 relative to a position and an orientation of a transport vehicle 104. For instance, the aligned position may represent a position and an orientation of the cart 108 relative to the transport vehicle 104 that positions and orients the cart 108 and the auger 504 of the auger system 502 of the cart 108 such that an unloading system 116 (e.g., auger 504 and hydraulic motor 506) can correctly and precisely unload the commodity into the trailer 408 of the transport vehicle 104. Furthermore, the aligned position may represent a position and an orientation of the cart 108 relative to the transport vehicle 104 that positions and orients a downspout of the auger 504 of the auger system 502 at least substantially centered (e.g., horizontally, laterally centered) over the trailer 408 of the transport vehicle 104. In other words, the aligned position may result in the downspout of the auger 504 being at least substantially centered between lateral sidewalls of the trailer 408 of the transport vehicle 104. This positioning ensures that the commodity is evenly distributed and minimizes the risk of spillage. Centering the downspout of the auger 504 allows for a more controlled and efficient unloading process, ensuring that the commodity flows directly into the trailer 408 without accumulating on one side. In some embodiments, the aligned position is further determined (e.g., calculated) based on received or determined position and orientation of the transport vehicle 104 (e.g., a GNSS position of the transport vehicle 104).

In some embodiments, the aligned position may include an alignment distance (D) at which the aligned position is located from the transport vehicle 104. In some embodiments, the alignment distance (D) is measured in a direction that is orthogonal to a center longitudinal axis of the transport vehicle 104 (e.g., an axis that extends from a front to a rear of the transport vehicle 104). For example, the alignment distance (D) may be a distance by which the aligned position is laterally offset from a lateral side of the transport vehicle 104.

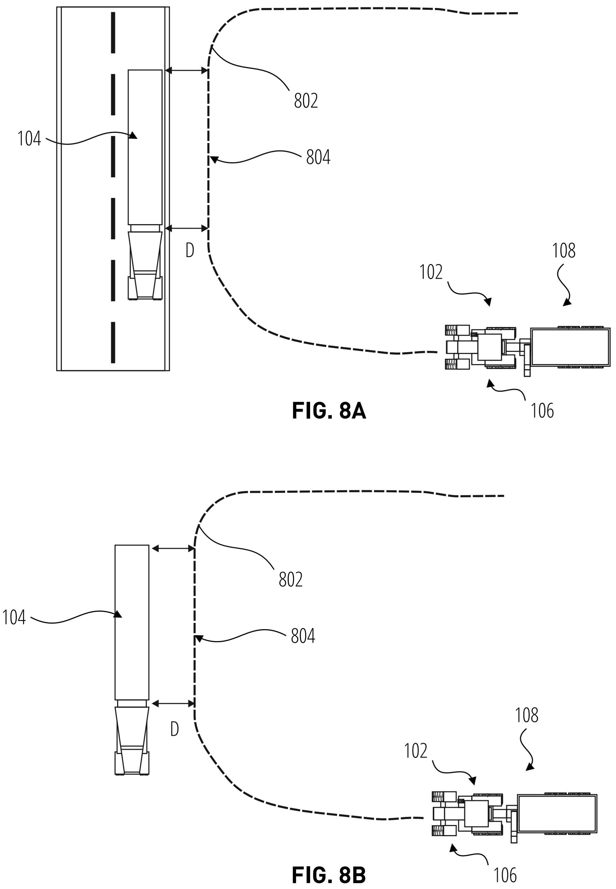

FIG. 8A through FIG. 8D show top views of an agricultural vehicle 106 approaching a transport vehicle 104 along an approach path 802 that results in the agricultural vehicle 106, when positioned and oriented in the aligned position 804, being distanced from the transport vehicle 104 by the alignment distance (D).

Referring to FIG. 7 through FIG. 8D, in some embodiments, the method 700 may include, responsive to determining the aligned position, causing the cart 108 to automatically align with the transport vehicle 104, as shown in act 722. As a non-limiting example, the control system 204 of the agricultural vehicle 106 may control one or more actuators and one or more operations (e.g., steering and propulsion) of the agricultural vehicle 106 and the cart 108 to cause the agricultural vehicle 106 and the cart 108 to align with the transport vehicle 104. Causing the agricultural vehicle 106 and the cart 108 to automatically align with the transport vehicle 104 may include utilizing position data and orientation data received from the transport vehicle 104 (e.g., a GNSS position of the transport vehicle 104), position data and orientation data determined regarding the transport vehicle 104 (e.g., position data and orientation data determined above in regard to any of acts 706 through act 718), and/or position data and orientation data related to the agricultural vehicle 106 and/or cart 108 (e.g., a GNSS position of the agricultural vehicle 106 and/or cart 108). In particular, the cart management system 202 may utilize a determined position and orientation of the transport vehicle 104 and position data and orientation data related to the agricultural vehicle 106 and/or cart 108 (e.g., determined from the labeled fused data) to determine a starting position (e.g., present position) of the agricultural vehicle 106 and/or cart 108 relative to the aligned position of the cart 108.

Causing the cart 108 to automatically align with the selected transport vehicle 104 may further include determining a path (e.g., immediate path, approach path) to the aligned position from a current position of the cart 108. For example, the cart management system 202 may determine the path from the current position of the cart 108 to the aligned position. In some embodiments, the cart management system 202 may utilize the enhanced fused data to determine a path (e.g., immediate path, approach path) from the current position of the cart 108 to the aligned position. In one or more embodiments, the cart management system 202 may further utilize the enhanced fused data to identify obstacles in the determined path (e.g., immediate path, approach path). Additionally, the cart management system 202 may perform dynamic path adjustments using the enhanced fused data, which is captured and determined in real-time data, to adjust the determined path (e.g., immediate path, approach path) to avoid the identified obstacles. Furthermore, the cart management system 202 may utilize one more path planning algorithms and machine learning techniques to determine the path (e.g., immediate path, approach path) from the current position of the cart 108 to the aligned position.

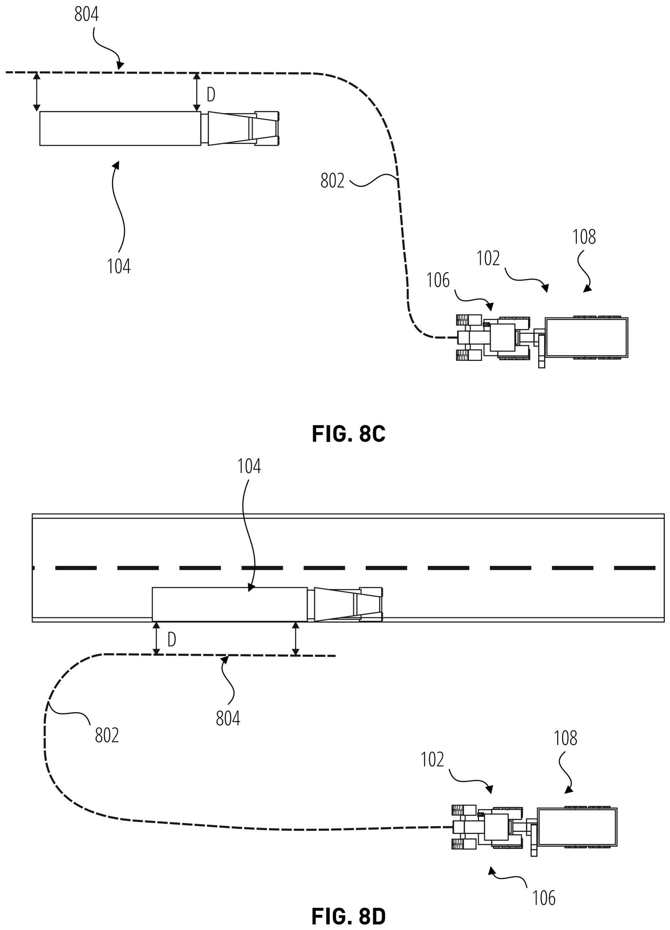

Referring still to FIG. 7 through FIG. 8D together, FIG. 8A, FIG. 8B, and FIG. 8C show the agricultural vehicle 106 approaching the transport vehicle 104 along an approach path 802 that causes the agricultural vehicle 106 to approach from a front of the transport vehicle 104. Approaching the transport vehicle 104 from the front may enable the agricultural vehicle 106 and the cart 108 may avoid any potential interference with structures (e.g., tarps) located on a passenger side of the transport vehicle 104. The method 700 may ensure that any unloading process remains unobstructed, facilitating a relatively seamless transfer of commodity.

FIG. 8D shows the agricultural vehicle 106 approaching the transport vehicle 104 along an approach path 802 that causes the agricultural vehicle 106 to approach from a rear of the transport vehicle 104. For example, in alternative embodiments where approaching the transport vehicle 104 from the front is not feasible due to an orientation of the transport vehicle 104 or other constraints (e.g., avoid entering public roads or concrete surfaces to mitigate safety risks and comply with traffic regulations), aligning the agricultural vehicle 106 and the cart 108 with the transport vehicle 104 may include approaching the transport vehicle 104 from the rear. In such embodiments, autonomous agricultural system 102 may initiate an unloading process from the rear of the transport vehicle 104.

Referring still to FIG. 7 through FIG. 8D together, the transport vehicles 104 may be positioned and oriented either along a road (e.g., public road) or directly on the field. Accordingly, the path (e.g., immediate path, approach path) to the aligned position from a current position of the cart 108 may be determined based at least partially on whether a given transport vehicle 104 is positioned and oriented along a road or directly on the field.

Referring still to FIG. 7, in some embodiments, the method 700 may further include determining at least one characteristic of the transport vehicle 104. For example, the cart management system 202 may determine at least one characteristic of the transport vehicle 104 from the enhanced fused data. In some embodiments, the determined at least one characteristic of the transport vehicle 104 may be utilized in truck selection. In one or more embodiments, the at least one characteristic of the transport vehicle 104 may include one or more of a size, dimensions, a shape, a structure, wheels and axles, a load capacity, or identification markings.

Moreover, method 700 may optionally include causing the unloading system 116 of the cart 108 to unload a commodity from the hopper 112 of the cart 108 to a trailer 408 of the transport vehicles 104. In particular, the cart management system 202 may active the auger 504 or a conveyor of the cart 108, which may transfer the commodity from the hopper 112 of the cart 108 to the trailer 408 of the transport vehicle 104. The commodity may flow through the auger 504, which is positioned over an opening of the trailer 408. The flow rate of the commodity may be monitored by the cart management system 202 and may adjust a position of the auger 504 to ensure even distribution of the commodity within the trailer 408, preventing overloading or spillage. Throughout the process, a level of the commodity in both the hopper 112 of the cart 108 and the trailer of the transport vehicle 104 may be monitored, and the cart management system 202 may make adjustments as determined requisite to maintain a steady and efficient transfer. Once the hopper of the cart 108 is emptied, the cart management system 202 may shut off the auger 504. The transport vehicle 104 and trailer 408 may be transported to a next destination.

FIG. 9 is a schematic view of the control system 204 (e.g., computing device) that may implement the cart management system 202, which may operate one or more functions of the agricultural vehicle 106 and/or the cart 108 according to some embodiments of the disclosure. Furthermore, FIG. 9 may also represent the computing devices 410, which may operate the transport vehicle 104 according to some embodiments of the disclosure. For ease of description, FIG. 9 is described herein with reference to the control system 204; however, the disclosure is not so limited, and the description of FIG. 9 is equally applicable to the cart management system 202 itself and the computing devices 410.

The control system 204 may include a communication interface 902, a processor 904, a memory 906, a storage device 908, and a bus 910 in addition to the input/output device 912.

In some embodiments, the processor 904 includes hardware for executing instructions, such as those making up a computer program. As an example, and not by way of limitation, to execute instructions, the processor 904 may retrieve (or fetch) the instructions from an internal register, an internal cache, the memory 906, or the storage device 908 and decode and execute them. In some embodiments, the processor 904 may include one or more internal caches for data, instructions, or addresses. As an example, and not by way of limitation, the processor 904 may include one or more instruction caches, one or more data caches, and one or more translation look aside buffers (TLBs). Instructions in the instruction caches may be copies of instructions in the memory 906 or the storage device 908.

The memory 906 may be coupled to the processor 904. The memory 906 may be used for storing data, metadata, and programs for execution by the processor(s). The memory 906 may include one or more of volatile and non-volatile memories, such as Random-Access Memory ("RAM"), Read-Only Memory ("ROM"), a solid state disk, Flash, Phase Change Memory ("PCM"), or other types of data storage. The memory 906 may be internal or distributed memory.

The storage device 908 may include storage for storing data or instructions. As an example, and not by way of limitation, storage device 908 can comprise a non-transitory storage medium described above. The storage device 908 may include a hard disk drive (HDD), a floppy disk drive, Flash memory, an optical disc, a magneto-optical disc, magnetic tape, or a Universal Serial Bus (USB) drive or a combination of two or more of these. The storage device 908 may include removable or non-removable (or fixed) media, where appropriate. The storage device 908 may be internal or external to the computing storage device 908. In one or more embodiments, the storage device 908 is non-volatile, solid-state memory. In other embodiments, the storage device 908 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The communication interface 902 can include hardware, software, or both. The communication interface 902 may provide one or more interfaces for communication (such as, for example, packet-based communication) between the control system 204 and one or more other computing devices or networks (e.g., a server, etc.). As an example, and not by way of limitation, the communication interface 902 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 910 (e.g., a Controller Area Network (CAN) bus) may include hardware, software, or both that couples components of control system 204 to each other and to external components.

The input/output device 912 may allow an operator of the control system 204 to provide input to, receive output from, and otherwise transfer data to and receive data from control system 204. The input/output device 912 may include a mouse, a keypad or a keyboard, a joystick, a touch screen, a camera, an optical scanner, network interface, modem, other known I/O devices, or a combination of such I/O interfaces. The input/output device 912 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 912 is configured to provide graphical data to a display for presentation to an operator. The graphical data may be representative of one or more graphical user interfaces and/or any other graphical content as may serve a particular implementation. The input/output device 912 may be utilized to display data (e.g., images and/or video data) received from the one or more image sensors and provide one or more recommendations of adjusting operation of the agricultural vehicle 106 and/or the cart 108 and/or video data to assist an operator in navigating the agricultural vehicle 106 and cart 108.

All references cited herein are incorporated herein in their entireties. If there is a conflict between definitions herein and in an incorporated reference, the definition herein shall control.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. An autonomous agricultural system comprising an agricultural vehicle and a cart operably coupled to the agricultural vehicle, the agricultural vehicle comprising:
a cart management system for monitoring and controlling operation of the cart and comprising:
an array of sensors mounted on at least one the agricultural vehicle or the cart;
at least one processor; and
at least one non-transitory computer-readable storage medium storing instructions thereon that, when executed by the at least one processor, cause the cart management system to:
capture, via a stereo camera system of the array of sensors and in real-time, first image data and second image data of the agricultural vehicle, the cart, and a transport vehicle;
capture, via the array of sensors, sensor data of the agricultural vehicle, the cart, and a transport vehicle;
match features depicted in the first image data and the second image data;
based at least partially on matched features depicted in the first image data and the second image data, determine a disparity of the first image data and the second image data;
based at least partially on the disparity of the first image data and the second image data, estimate depth data from the first image data and the second image data;
analyze the sensor data to identify and classify the agricultural vehicle, the cart, and the transport vehicle to generate labeled sensor data;
fuse the labeled sensor data with the depth data to form labeled fused data;
receive GNSS data and IMU data related to at least one of the agricultural vehicle, the cart, and a transport vehicle;
fuse the labeled fused data with the GNSS data and IMU data to generate enhanced fused data;
based at least partially on the enhanced fused data, determine an aligned position of the cart relative to the transport vehicle; and
responsive to determining the aligned position, cause the cart to automatically align with the transport vehicle.

2. The autonomous agricultural system of claim 1, wherein the disparity of the first image data and the second image data is inversely proportional to a distance of an object depicted in the first image data and the second image data from the first stereo camera and the second stereo camera, respectively.

3. The autonomous agricultural system of claims 1 or 2, wherein the depth data is determined based at least partially on a distance between the first stereo camera and the second stereo camera.

4. The autonomous agricultural system of claim 3, wherein the distance is at least 0.5m.

5. The autonomous agricultural system of any one of claims 1-4, wherein the cart management system further comprises instructions that, when executed by the at least one processor, cause the cart management system to convert the estimated depth data to point-cloud data.

6. The autonomous agricultural system of claim 5, wherein fusing the labeled sensor data with the depth data comprises utilizing a PointPillars algorithm to transform the point-cloud data into two-dimensional data.

7. The autonomous agricultural system of any one of claims 1-6, wherein the cart management system further comprises instructions that, when executed by the at least one processor, cause the cart management system to:
capture, via the array of sensors and in real-time, sensor data of an auger system of an unloading system of the cart;
analyze the captured sensor data of the auger system to determine a position and an orientation of the auger; and
determine the aligned position based at least partially on the determined position and the determined orientation of the auger.

8. The autonomous agricultural system of any one of claims 1-7, wherein analyzing the first image data and the second image data to identify and classify the agricultural vehicle, the cart, and the transport vehicle to generate the labeled sensor data comprises utilizing a single shot detector algorithm to identify the agricultural vehicle, the cart, and the transport vehicle.

9. The autonomous agricultural system of any one of claims 1-8, wherein determining the aligned position comprises determining an alignment distance at which the aligned position is located from the transport vehicle.

10. The autonomous agricultural system of any one of claims 1-9, wherein the aligned position comprises a position and an orientation of the cart relative to a determined position and a determined orientation of the transport vehicle that aligns the cart for unloading a commodity within a hopper of the cart into a trailer of the transport vehicle.

11. The autonomous agricultural system of claim 10, wherein the position and the orientation of the cart of the aligned position, when the cart is in the aligned position, result in a downspout of an auger being oriented above the trailer of the transport vehicle and at least substantially horizontally centered between lateral sidewalls of the trailer of the transport vehicle.

12. The autonomous agricultural system of any one of claims 1-11, wherein the cart management system further comprises instructions that, when executed by the at least one processor, cause the cart management system to:
analyze the sensor data to determine at least one characteristic of the transport vehicle; and
based at least partially on the determined at least one characteristic of the transport vehicle, determine the aligned position of the cart that relative to the transport vehicle.

13. A method of monitoring and controlling operation of a cart of an autonomous agricultural system, the cart being operably coupled to an agricultural vehicle of the autonomous agricultural system, the method comprising:
capturing, via a stereo camera system of an array of sensors and in real-time, first image data and second image data of the agricultural vehicle, the cart, and a transport vehicle;
capturing, via the array of sensors, sensor data of the agricultural vehicle, the cart, and a transport vehicle;
matching features depicted in the first image data and the second image data;
based at least partially on matched features depicted in the first image data and the second image data, determining a disparity of the first image data and the second image data;
based at least partially on the disparity of the first image data and the second image data, estimating depth data from the first image data and the second image data;
analyzing the sensor data to identify and classify the agricultural vehicle, the cart, and the transport vehicle to generate labeled sensor data;
fusing the labeled sensor data with the depth data to form labeled fused data;
receiving GNSS data and IMU data related to at least one of the agricultural vehicle, the cart, and a transport vehicle;
fusing the labeled fused data with the GNSS data and IMU data to generate enhanced fused data;
based at least partially on the enhanced fused data, determining an aligned position of the cart relative to the transport vehicle; and
responsive to determining the aligned position, causing the cart to automatically align with the transport vehicle.

14. The method of claim 13, wherein causing the cart to automatically align with the transport vehicle comprises:
determining a path between a current position and a current orientation of the cart and the aligned position relative to the transport vehicle; and
causing the agricultural vehicle to travel along the determined path to move the cart to the aligned position.

15. The method of claim 14, wherein capturing the first image data and the second image data is triggered by the agricultural vehicle crossing a virtual boundary.
